# EUROPÄISCHE PATENTSCHRIFT

(11) **EP 3 851 306 B1**
(45) Veröffentlichungstag und Bekanntmachung des Hinweises auf die Patenterteilung: **23.08.2023**
(21) Anmeldenummer: 21150838.7
(22) Anmeldetag: 11.01.2021
(51) Int. Cl.: B60H 1/00, B60H 3/00, B60S 1/64, G06V 20/59, B60S 3/00

(54) **VERUNREINIGUNGSERKENNUNG IN EINEM FAHRZEUG**
IMPURITY DETECTION IN A VEHICLE
DÉTECTION DE CONTAMINATION DANS UN VÉHICULE

(30) Priorität: 16.01.2020 DE 102020000235
(43) Veröffentlichungstag der Anmeldung: 21.07.2021
(73) Patentinhaber: MAN Truck & Bus SE, 80995 München (DE)
(72) Erfinder: Haider, Michael, 80995 München (DE)
(74) Vertreter: v. Bezold & Partner Patentanwälte - PartG mbB

(56) Entgegenhaltungen:
- EP-A1- 2 423 014
- EP-B1- 2 423 014
- DE-A1-102016 212 940
- FR-A1- 2 955 031
- US-A1- 2006 179 853

## Beschreibung

Die Erfindung betrifft ein Fahrzeug, vorzugsweise ein autonomes Fahrzeug, zur Personenbeförderung, vorzugsweise einen Omnibus. Die Erfindung betrifft auch ein Verfahren zum Betreiben eines, vorzugsweise autonomen, Fahrzeugs.

Ein aktueller Entwicklungstrend im Automobilbau ist die Entwicklung hin zum autonomen Fahren eines Fahrzeuges. Federführend ist die Entwicklung bei Personenkraftwagen. Für Nutzfahrzeuge werden die Lösungen adaptiert. Das Ziel wird sein, dass Fahrzeuge vollautonom Personen von einem Abholpunkt zu einem gewünschten Zielpunkt transportieren. Die Verantwortung eines sicheren Fahrzeugbetriebs wird vom dem Fahrer auf die Fahrsysteme übergehen.

Ein Aspekt im Themengebiet "autonomes Fahren" ist, dass im Zuge eines neuen Technologiesprungs alte bekannte, aber vergessene Situationen, Mechanismen oder Abläufe wieder auftreten können. Eine dieser Situationen oder Abläufe ist die laufende Kontrolle des Innenraums des Fahrzeugs, ob nicht durch Einwirkungen der beförderten Personen die Nutzung für weitere Personenbeförderung eingeschränkt oder unbrauchbar gemacht wird. Solche Einwirkungen können beispielsweise durch Vermüllen des Innenraums (z. B. Liegenlassen von Zeitungen, Zeitschriften, Verpackungsmaterial, Auslaufen von flüssigen Produkten aus offenen bzw. undichten Verpackungen) oder körperliche Ausscheidungen in Form von Gerüchen oder Körperflüssigkeiten auftreten. Dieser Fall kann heute durch den Fahrer laufend kontrolliert werden und ist eine sehr wichtige Nebenerscheinung im Fahrbetrieb. Im autonomen Fahrbetrieb ohne Fahrer ist diese Kontrollfunktion nicht länger gewährleistet.

Die DE 10 2016 215 525 A1 betrifft ein Verfahren zum Reinigen eines Innenraums eines insbesondere autonom fahrbaren Kraftfahrzeugs mit folgenden Schritten: Erfassen zumindest eines Bodenbereichs des Innenraums mittels zumindest einer Kameraeinrichtung, Ermitteln eines Verschmutzungsgrads des Bodenbereichs durch Auswerten des von der Kameraeinrichtung erfassten Bildes und Reinigen zumindest des Bodenbereichs, wenn der ermittelte Verschmutzungsgrad einen vorgebbaren ersten Grenzwert überschreitet.

Die DE 10 2017 125 484 A1 offenbart ein autonomes Fahrzeug mit Innenraumsensoren einschließlich einer Kamera, einer IR-Kamera, eines elektrochemischen Sensors, eines Feuchtigkeitssensors und eines Temperatursensors. Anfängliche und finale Ausgaben dieser Sensoren werden für eine Fahrt, auf der ein oder mehrere Passagiere befördert werden, aufgezeichnet. Falls Veränderungen der Ausgaben der Sensoren erfasst werden, kann bewertet werden, ob die finalen Ausgaben der Sensoren akzeptabel sind. Falls die Ausgaben für inakzeptabel befunden werden, kann das Fahrzeug autonom zu einer Reinigungsstation gefahren werden. Persönliche Gegenstände können in Kameraausgaben identifiziert werden und als Reaktion Warnungen erzeugt werden.

Die DE 10 2017 101 508 A1 offenbart Verfahren und Systeme zur automatischen Aufrechterhaltung der Sauberkeit eines Fahrzeugs. Bei einer Ausführungsform umfasst ein Verfahren: Empfangen, durch einen Prozessor, zumindest eines Sensorsignals von einem Sensor, der eine Überwachung in Bezug auf Feststoffe innerhalb des Inneren eines Fahrzeugs durchführt; Bestimmen, durch den Prozessor, eines Niveaus an Verschmutzung des Fahrzeugs auf Grundlage des Sensorsignals; und selektives Erzeugen, durch den Prozessor, eines Steuersignals an ein Reinigungselement des Fahrzeugs und/oder einer Nachrichtenmitteilung, auf Grundlage der Bestimmung, um das Niveau an Sauberkeit zu erzielen.

Die DE 10 2016 212940 A1 betrifft ein Verfahren zur Steuerung einer Belüftung eines Innenraums. Zur effizienteren Überwachung des Innenraums wird vorgeschlagen, dass bei dem Verfahren zur Steuerung einer Belüftung eines Innenraums, eine Infrarotkamera zumindest einen Parameter des Innenraums ermittelt und der zumindest eine Parameter überwacht wird.

Die US 2006/179853 A1 offenbart ein System umfassend einen Kohlendioxidsensor, einen Temperatursensor und ein Steuergerät. Der Kohlendioxidsensor steht in elektrischer Verbindung mit dem Steuergerät und erzeugt ein Kohlendioxidsignal, das den in der Luft in der Fahrzeugkabine enthaltenen Kohlendioxidgehalt angibt. Der Temperatursensor steht ebenfalls in elektrischer Verbindung mit dem Steuergerät und erzeugt ein Temperatursignal, das die Temperatur in der Fahrzeugkabine anzeigt. Das Steuergerät ist so konfiguriert, dass es auf der Grundlage des Kohlendioxidsignals und des Temperatursignals eine Sicherheitsvorkehrung einleitet.

Der Erfindung liegt die Aufgabe zu Grunde, eine alternative und/oder verbesserte Technik zum Umgang mit Verunreinigungen in einem, vorzugsweise autonomen, Fahrzeug zur Personenbeförderung zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Gemäß einem ersten Aspekt ist ein (z. B. Großraum-) Fahrzeug, vorzugsweise ein autonomes Fahrzeug, zur Personenbeförderung, vorzugsweise ein Omnibus, offenbart. Das Fahrzeug weist eine Signalisiereinrichtung auf, die dazu ausgebildet ist, eine Information an mindestens eine Person im Fahrzeug zu signalisieren. Das Fahrzeug weist eine Überwachungseinrichtung auf, die dazu ausgebildet ist, einen Personenaufenthaltsraum des Fahrzeugs zu überwachen. Das Fahrzeug weist eine Auswerteeinrichtung auf, die dazu ausgebildet ist, Signale von der Überwachungseinrichtung zu empfangen und basierend auf den empfangenen Signalen von der Überwachungseinrichtung einen Abschnitt des Personenaufenthaltsraums mit einer, vorzugsweise gasförmigen, flüssigen und/oder festen, Verunreinigung zu erkennen. Die Auswerteeinrichtung ist ferner dazu ausgebildet, eine Sperrung des erkannten Abschnitts zu bestimmen und die Signalisiereinrichtung anzuweisen, den gesperrten Abschnitt (z. B. an die Person) zu signalisieren (z. B. visuell, akustisch und/oder physisch).

Das Fahrzeug ermöglicht eine automatische Erkennung einer Verunreinigung mit anschließender automatischer Sperrung des verunreinigten Bereichs. Vorzugsweise bietet das Fahrzeug den Vorteil, dass es trotz Verunreinigung weiter betrieben werden kann. Es ist somit nicht notwendig, das zweckmäßig autonome Fahrzeug bei einer Verunreinigung direkt aus dem Linienbetrieb zu nehmen. Durch die Signalisierung des gesperrten Abschnitts können Personen darüber informiert werden, dass sie sich zum Schutz vor der Verunreinigung besser außerhalb des gesperrten Abschnitts aufhalten sollten. In diesem Zusammenhang können auch Maßnahmen zur Beseitigung der Verunreinigung in dem gesperrten, signalisierten Abschnitt im laufenden Betrieb des Fahrzeugs und ohne Beeinträchtigung durch Personen im gesperrten Bereich ausgeführt werden.

Es ist möglich, dass die Auswerteeinheit eine Elektronik (z. B. mit Mikroprozessor(en) und Datenspeicher) aufweist, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Vorzugsweise kann die Überwachungseinrichtung mindestens einen Flüssigkeitssensor zur Flüssigkeitserkennung, mindestens eine Kameravorrichtung und/oder mindestens einen elektrochemischen Sensor oder Gassensor zur Geruchserkennung bzw. zur olfaktorischen Überwachung eines Abschnitts des Personenaufenthaltsraums aufweisen.

Bevorzugt wird der erkannte Abschnitt im laufenden (z. B. autonomen) Personenbeförderungsfahrbetrieb des Fahrzeugs von der Auswerteeinrichtung gesperrt und/oder die Signalisiereinrichtung wird im laufenden (z. B. autonomen) Personenbeförderungsfahrbetrieb des Fahrzeugs zum Signalisieren des gesperrten Abschnitts angewiesen.

In einem Ausführungsbeispiel ist der gesperrte Abschnitt ein Sitz, eine Sitzgruppe oder ein Stehbereich des Personenaufenthaltsraums. Somit können beispielsweise einzelne Sitze, ganze Sitzgruppen oder ein Stehbereich für eine Benutzung gesperrt werden.

In einem weiteren Ausführungsbeispiel ist die Signalisiereinrichtung dazu ausgebildet, den gesperrten Abschnitt visuell zu signalisieren, vorzugsweise mittels einer Anzeige der Signalisiereinrichtung und/oder mittels Anstrahlung des gesperrten Abschnitts. Personen im Personenaufenthaltsraum können so auf einfache Weise den gesperrten Abschnitt erkennen und sich von diesem fernhalten oder diesen verlassen.

In einem weiteren Ausführungsbeispiel ist die Signalisiereinrichtung dazu ausgebildet, den gesperrten Abschnitt akustisch zu signalisieren (z. B. mittels Durchsage oder Warnsignal bei Annäherung einer Person an den gesperrten Abschnitt).

In einem weiteren Ausführungsbeispiel ist die Signalisiereinrichtung dazu ausgebildet, den gesperrten Abschnitt durch eine physische Sperrung zu signalisieren (z. B. mittels automatischer Aktivierung einer Zugangsbarriere, automatischer Verriegelung einer Zugangstür, automatisches Absenken einer Zugangsschranke, automatischer Aktivierung eines Luftvorhangs und/oder automatisches Hochklappen eines Sitzes). Personen im Personenaufenthaltsraum können somit aktiv daran gehindert werden, in den gesperrten Abschnitt einzudringen.

Erfindungsgemäß ist die Überwachungseinrichtung dazu ausgebildet, mehrere Abschnitte des Personenaufenthaltsraums des Fahrzeugs zu überwachen. Die Auswerteeinrichtung ist dazu ausgebildet, denjenigen Abschnitt aus den mehreren Abschnitten zu erkennen, der die Verunreinigung aufweist. Dies basiert auf einer unterschiedlichen Intensität einer Geruchsmessung an unterschiedlichen Positionen im Personenaufenthaltsraum (z. B. mittels mehrerer, verteilt angeordneter elektrochemischer Sensoren). Zusätzlich kann dies auf einer Anordnung eines Sensors der Überwachungseinrichtung, der die Verunreinigung erfasst hat, basieren.

In einer weiteren Ausführungsform weist die Überwachungseinrichtung einen oder mehrere elektrochemische Sensoren auf, der oder die vorzugsweise zur olfaktorischen (z. B. geruchstechnischen) Überwachung der mehreren Abschnitte des Personenaufenthaltsraums angeordnet sind, bevorzugt am Dachhimmel, an Dachvouten, an mindestens einer Haltestange, an einer Innenverkleidung und/oder an mindestens einem Fensterrahmen des Fahrzeugs.

In einer Ausführungsvariante weist die Überwachungseinrichtung mehrere Flüssigkeitserfassungssensoren auf, die vorzugsweise zur Überwachung auf ein Vorhandensein einer Flüssigkeit in den mehreren Abschnitten des Personenaufenthaltsraums angeordnet sind, besonders bevorzugt in Sitzen und/oder im Boden des Fahrzeugs. So können auf einfache Weise Verunreinigungen erkannt werden, die durch austretende Flüssigkeiten bewirkt werden.

In einer weiteren Ausführungsvariante weist die Überwachungseinrichtung mindestens eine Kameravorrichtung auf, die zur visuellen Überwachung der mehreren Abschnitte des Personenaufenthaltsraums angeordnet ist. Mittels Bilderkennungsalgorithmen kann das Kamerabild ausgewertet und Verunreinigungen erkannt werden.

In einer weiteren Ausführungsvariante ist die Auswerteeinrichtung ferner dazu ausgebildet, die Sperrung des erkannten Abschnitts erst dann zu bestimmen, wenn die Verunreinigung in dem erkannten Abschnitt nach einer vorbestimmten Zeitdauer (z. B. in einem Bereich zwischen 10 s und 5 min) noch immer besteht. Beispielsweise können so schnell flüchtige Geruchsverunreinigungen nicht zu einer Sperrung des erkannten Abschnitts führen.

In einem Ausführungsbeispiel weist das Fahrzeug ferner eine Desodoriereinrichtung auf, die dazu ausgebildet ist, einen Geruchsstoff zum Desodorieren einzusprühen. Vorzugsweise kann die Auswerteeinrichtung ferner dazu ausgebildet sein, die Desodoriereinrichtung zum Einsprühen des Geruchsstoffs anzuweisen, vorzugsweise in den gesperrten Abschnitt hinein oder in einer Richtung zu dem gesperrten Abschnitt. Somit können Geruchsverunreinigungen mit dem eingesprühten Geruchsstoff überdeckt werden.

In einem weiteren Ausführungsbeispiel weist das Fahrzeug ferner eine Fahrzeuglüftungseinrichtung auf, die dazu ausgebildet ist, das Fahrzeug zu lüften. Vorzugsweise kann die Auswerteeinrichtung ferner dazu ausgebildet sein, die Fahrzeuglüftungseinrichtung zum Lüften des gesperrten Abschnitts anzuweisen (z. B. durch Aktivierung oder Verstärkung einer Fahrzeuglüftung). Somit können beispielsweise Geruchsverunreinigungen weggelüftet werden.

In einem weiteren Ausführungsbeispiel weist das Fahrzeug ferner eine (z. B. elektromotorische) Dachluke und/oder einen (z. B. elektromotorischen) Fensteröffner auf. Vorzugsweise kann die Auswerteeinrichtung ferner dazu ausgebildet sein, die Dachluke und/oder den Fensteröffner zum Öffnen anzuweisen, um den gesperrten Abschnitt zu lüften. Somit können beispielsweise Geruchsverunreinigungen weggelüftet werden.

In einer Ausführungsform weist das Fahrzeug ferner eine (z. B. mobile oder stationäre) Reinigungseinrichtung (z. B. Wisch- oder Saugroboter, fest installierter Reinigungsarm und/oder Sitzbezugswechsler usw.) auf. Vorzugsweise kann die Auswerteeinrichtung ferner dazu ausgebildet sein, die Reinigungseinrichtung zum Reinigen des gesperrten Abschnitts anzuweisen.

In einer weiteren Ausführungsform ist die Auswerteeinrichtung ferner dazu ausgebildet, die Sperrung des Abschnitts an eine (externe) Leitstelle zu kommunizieren, vorzugsweise wenn die Verunreinigung auch nach einer Reinigung durch eine Reinigungseinrichtung des Fahrzeugs weiter besteht, wenn die Verunreinigung auch nach einer Lüftung und/oder Desodorierung des Fahrzeugs weiter besteht, wenn die Verunreinigung auch nach Ablauf einer vorbestimmten Zeitdauer weiter besteht, und/oder wenn eine Person in dem gesperrten Abschnitt (z. B. mittels einer Personenerkennungseinrichtung) erkannt wird, die trotz Warnung mittels einer Warneinrichtung den gesperrten Abschnitt nicht verlässt.

Es ist auch möglich, dass die Sperrung des Abschnitts an ein z. B. fahrzeuginternes oder fahrzeugexternes Buchungssystem (z. B. zur Sitzplatzreservierung) übertragen wird. Das Buchungssystem kann beispielsweise reservierte Sitze des gesperrten Abschnitts automatisch umbuchen und/oder eine entsprechende Information an den Reservierer automatisch übersenden.

In einer Ausführungsvariante weist das Fahrzeug ferner eine Personenerkennungseinrichtung auf, die dazu ausgebildet ist, eine Anwesenheit einer Person im gesperrten Abschnitt zu erkennen. Vorzugsweise kann das Fahrzeug ferner eine Warneinrichtung aufweisen, die dazu ausgebildet ist, eine Warnung auszugeben (und z. B. separat zu oder integriert mit der Signalisiereinrichtung ausgeführt ist). Beispielsweise kann die Auswerteeinrichtung ferner dazu ausgebildet sein, Signale von der Personenerkennungseinrichtung zu empfangen, und basierend auf den empfangenen Signalen von der Personenerkennungseinrichtung die Warneinrichtung anzuweisen, die Person im gesperrten Abschnitt des Personenaufenthaltsraums zu warnen (z. B. visuell, akustisch und/oder haptisch), vorzugsweise vor einer bevorstehenden automatischen Reinigung des gesperrten Abschnitts.

In einer Ausführungsvariante ist die Auswerteeinrichtung von einer (externen) Leitstelle und/oder einer Personenerkennungseinrichtung zur Erkennung einer Person im Personenaufenthaltsraum aus aktivierbar und/oder steuerbar.

In einer Weiterbildung ist die Auswerteeinrichtung ferner dazu ausgebildet, die Verunreinigung in einem von der Leitstelle und/oder der Personenerkennungseinrichtung bestimmten Abschnitt des Personenaufenthaltsraums zu erkennen. Alternativ oder zusätzlich kann die Auswerteeinrichtung ferner dazu ausgebildet sein, das Fahrzeug autonom zu einer von der Leitstelle bestimmten Reinigungsstation zu fahren.

Ein weiterer Aspekt betrifft ein Verfahren nach Anspruch 13 zum Betreiben eines, vorzugsweise autonomen

Fahrzeugs, vorzugsweise wie hierin offenbart. Das Verfahren weist ein (z. B. automatisches) Überwachen eines oder mehrerer Abschnitte eines Personenaufenthaltsraums des Fahrzeugs auf. Das Verfahren weist ein (z. B. automatisches) Erkennen eines Abschnitts des Personenaufenthaltsraums mit einer, vorzugsweise gasförmigen, flüssigen und/oder festen, Verunreinigung basierend auf dem Überwachen auf. Das Verfahren weist ein (z. B. automatisches) Sperren (z. B. virtuell und/oder physisch) des erkannten Abschnitts auf. Das Verfahren weist ein (z. B. automatisches) Signalisieren des gesperrten Abschnitts an mindestens eine Person im Fahrzeug auf. Das Verfahren kann die gleichen Vorteile realisieren, die hierin bereits für das Fahrzeug beschrieben sind.

In einer Weiterbildung weist das Verfahren ein (z. B. automatisches) Desodorieren oder Lüften des gesperrten Abschnitts, ein (z. B. automatisches) Kommunizieren des gesperrten Abschnitts an eine Leitstelle, ein (z. B. automatisches) Reinigen des gesperrten Abschnitts und/oder ein (z. B. automatisches) Warnen einer in dem gesperrten Abschnitt erkannten Person auf. Es ist auch möglich, dass das Fahrzeug beispielsweise ein Schienenfahrzeug, ein Wasserfahrzeug oder ein Luftfahrzeug zur Personenbeförderung ist.

Die zuvor beschriebenen bevorzugten Ausführungsformen und Merkmale der Erfindung sind im Rahmen des Schutzbereichs der Patentansprüche miteinander kombinierbar. Weitere Einzelheiten und Vorteile der Erfindung werden im Folgenden unter Bezug auf die beigefügten Zeichnungen beschrieben. Es zeigen:
Figur 1 ein Blockdiagramm eines beispielhaften Fahrzeugs;
Figur 2 eine schematische Darstellung eines beispielhaften Fahrzeugs; und
Figur 3 ein beispielhaftes Verfahren zum Betreiben eines Fahrzeugs.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

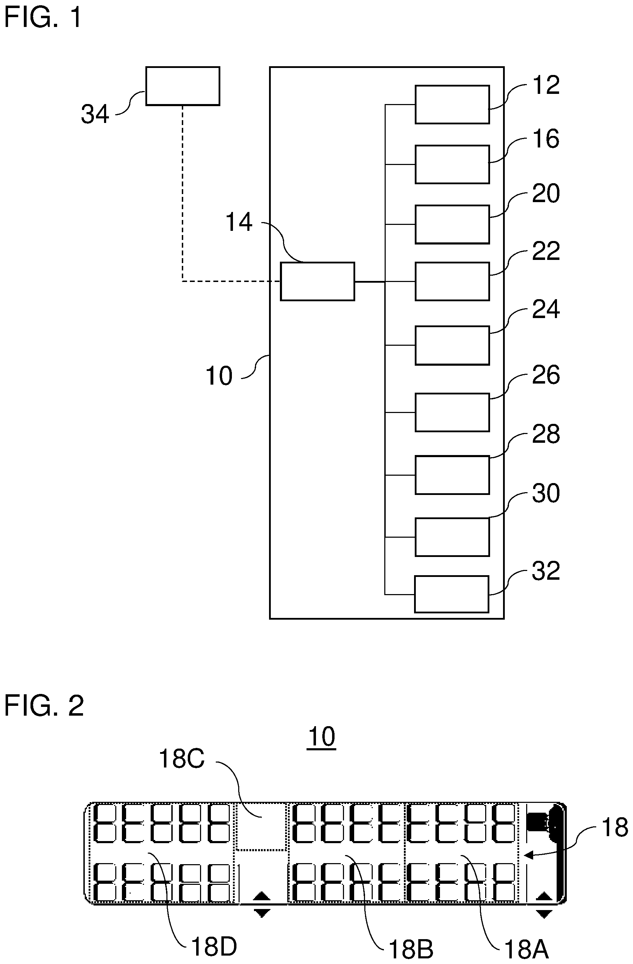

Figur 1 zeigt ein Blockdiagramm für ein Fahrzeug 10. Das Fahrzeug 10 ist ein Großraumfahrzeug zur Personenbeförderung. Bevorzugt ist das Fahrzeug ein Omnibus, z. B. ein Stadtbus oder ein Reisebus. Es ist allerdings beispielsweise auch möglich, dass das Fahrzeug ein Schienenfahrzeug (z. B. eine Straßenbahn oder ein Zug), ein Wasserfahrzeug (z. B. eine Fähre) oder ein Luftfahrzeug (z. B. Flugzeug) usw. ist. Die hierin offenbarten Techniken sind besonders bevorzugt für autonome Fahrzeuge geeignet, die sich ohne Fahrer autonom von einem Startpunkt zu einem Zielpunkt bewegen können. Allerdings können die hierin offenbarten Techniken auch von manuell gesteuerten Fahrzeugen verwendet werden, insbesondere zur Unterstützung des Fahrers des Fahrzeugs 10.

Das Fahrzeug 10 weist eine Überwachungseinrichtung 12, eine Auswerteeinrichtung 14 und eine Signalisiereinrichtung 16 auf.

Die Überwachungseinrichtung 12 ist nachfolgend unter Bezugnahme auf Figur 2 näher beschrieben.

Die Überwachungseinrichtung 12 dient zur Überwachung eines Personenaufenthaltsraums 18 des Fahrzeugs 10 auf Verunreinigungen. Je nach Ausführung der Überwachungseinrichtung 12 kann der Personenaufenthaltsraum 18 auf gasförmige, flüssige und/oder feste Verunreinigungen überwacht werden. Bevorzugt kann die Überwachungseinrichtung 12 so angeordnet sein, dass verschiedene Abschnitte 18A, 18B, 18C und 18D überwacht werden können. Im Ausführungsbeispiel sind die Abschnitte 18A, 18B und 18D jeweils mehrere Sitze (Sitzgruppe) in einem vorderen, mittleren oder hinteren Abschnitt des Personenaufenthaltsraums 18. Der Abschnitt 18C ist ein Stehbereich. Es ist auch möglich, dass die Abschnitte anders gebildet werden, z. B. als einzelne Sitzplätze, als Sitzreihe, als Doppelsitze oder als einzelne Stehplätze usw. Es ist möglich, dass die Überwachungseinrichtung 12 den gesamten Personenaufenthaltsraum 18 überwacht oder nur einen oder mehrere Teile davon.

Sensoren der Überwachungseinrichtung 12 können an unterschiedlichen Positionen in und am Fahrzeug 10 angeordnet sein, z. B. am Dachhimmel, an mindestens einer Haltestange, an mindestens einer Dachvoute, an mindestens einem Fensterrahmen, an mindestens einer Seitenwand, an mindestens einem Innenverkleidungsteil, an mindestens einem Sitz und/oder an einem Boden. Zweckmäßig ist die Positionierung eines jeweiligen Sensors der Überwachungseinrichtung 12 an dessen Funktion angepasst.

Vorzugsweise weist die Überwachungseinrichtung 12 mindestens zwei technisch verschiedene Sensoren oder zwei gleiche, aber räumlich getrennte Sensoren auf, damit ein Aussetzen oder eine Fehlerkennung aktiv erschwert wird. Sensoren der Überwachungseinrichtung 12 können auch redundant vorhanden sein.

Zweckmäßig weist die Überwachungseinrichtung 12 mehrere elektrochemische Sensoren auf. Die elektrochemischen Sensoren sind verteilt im Personenaufenthaltsraum 18 angeordnet. Vorzugsweise sind zumindest drei elektrochemische Sensoren verteilt im Personenaufenthaltsraum 18 angeordnet. Beispielsweise ist jedem elektrochemischen Sensor ein jeweiliger Abschnitt 18A, 18B, 18C, 18D zugeordnet. Die elektrochemischen Sensoren sind zur geruchstechnischen oder olfaktorischen Überwachung auf gasförmige oder aerosolartige Verunreinigungen ausgebildet. Die elektrochemischen Sensoren sind als sogenannte elektronische Nasen zur Messung von Gerüchen ausgeführt. Die elektrochemischen Sensoren sind beispielsweise oberhalb oder seitlich von den Sitzplätzen angeordnet, z. B. am Dachhimmel, an Dachvouten, an Fensterrahmen und/oder der Innenverkleidung.

Die Überwachungseinrichtung 12 kann beispielsweise mehrere Flüssigkeitssensoren aufweisen. Die Flüssigkeitssensoren können ein Vorhandensein einer Flüssigkeit direkt oder indirekt erfassen. Beispielsweise können die Flüssigkeitssensoren in den Sitzen (z. B. in den Sitzflächen), unter den Sitzen, in einem Auffangbecken oder Sammelbereich unter den Sitzen und/oder am Boden des Personenaufenthaltsraums 18 angeordnet sein.

Es ist möglich, dass die Flüssigkeitssensoren zumindest teilweise als druckempfindliche Sensoren ausgeführt sind. Die druckempfindlichen Sensoren (z. B. Piezosensor, mechanischer Taster, Druckknopf, Schaltfeld, Sensorhaut oder Druckleiste) können beispielsweise in die Aufhängung von Sitzen oder in die Sitzfläche eingebaut sein. Das Messprinzip kann eine Messung eines Gewichts vor und nach Belegung des Sitzplatzes aufweisen.

Es ist möglich, dass die Flüssigkeitssensoren zumindest teilweise als berührungslose Sensoren ausgeführt sind. Bei dieser Lösung können beispielsweise Sensoren eingesetzt werden, die über verschiedene Wirkprinzipien eine Bewegung erkennen. Hierzu können Schallwellenerzeuger, Temperatursensoren, Staudruckdüsen, Kameras usw. genutzt werden.

Der Einbau eines Schallwellenerzeugers (z. B. Ultraschall) kann z. B. in der Sitzfläche (z. B. Sitzpolster) erfolgen. Durch Einwirkung von Flüssigkeiten verändert sich das Schwingungsverhalten der Sitzfläche, was beispielsweise durch eine Veränderung der Amplitude der Schallwelle messbar ist. Bei einer Temperaturmessung können beispielsweise schnelle Temperaturschwankungen festgestellt werden, die durch Einwirken von Flüssigkeiten verursacht werden. Bei Messung mittels Temperatur kann über eine Anzahl von Sensoren ein Temperaturprofil für eine Fläche erstellt werden, das sich lokal ausweitet oder ändert, wenn eine Einwirkung stattfindet. Die Änderung wird dadurch ermittelt, dass sich der Wärmestrom an der belegten Stelle in Verhältnis zu benachbarten Stellen ändert. Je nach Einwirkung kann ein Wärmeeintrag, Wärmestau oder eine Abkühlung vorliegen. Der Einbau einer Staudruckdüse erkennt bei Vorhandensein einer Flüssigkeit eine Steigerung des Druckwiderstands. Eine Staudruckdüse kann auch zurückgelassene Gegenstände auf dem Sitz erkennen. Eine Kamera kann als Infrarotkamera Temperaturgradienten oder von einem Hauptfeld abweichende Temperaturfelder erkennen. Zum anderen kann eine Kamera durch Einwirkung einer Flüssigkeit verursachte Veränderung von Farben durch Verdunkelung oder Verdeckung erkennen. Es ist auch möglich, dass ein Indikatorstoff in dem Sitz oder Sitzbezug angeordnet ist, der eine Farbe verändert, wenn er mit Flüssigkeit in Kontakt kommt. Eine derartige Farbänderung am Sitz kann dann mit der Kamera erfasst werden. Mit Hilfe einer Kamera können ebenfalls zurückgelassene Gegenstände auf dem Sitz erkannt werden. Bei einer Sensorik, die auf einer Strommessung basiert, kann beispielsweise eine Stromflussmessung oder eine Messung eines Drahtwiderstands durchgeführt werden. Durch eine Einwirkung einer Flüssigkeit kann sich beispielsweise der gemessene Stromfluss oder der gemessene Drahtwiderstand verändern. Es ist auch möglich, dass bereits vorhandene Sensorik des Fahrzeugs 10 genutzt wird. Beispielsweise können im Falle von eingebauten optischen Fahrzeuginnenraumüberwachungssystemen die Kameras verwendet werden und, wenn gewünscht, mit einer zusätzlichen Sensorik oder Auswerteroutine kombiniert werden. Grundsätzlich sind auch Kombinationen aus den genannten Möglichkeiten möglich. Grundsätzlich sind die oben genannte Möglichkeiten teilweise auch zur Erkennung von ungewollten Gegenständen (z. B. Müll durch Verpackungen, Zeitschriften, Säcke, Beutel) geeignet und können genutzt werden, um Reisende beim Verlassen auf verlorene oder vergessene Gegenstände hinzuweisen.

Unter erneuter Bezugnahme auf die Figur 1 ist nachfolgend die Auswerteeinrichtung 14 beschrieben.

Die Auswerteeinrichtung 14 ist in Kommunikationsverbindung mit der Überwachungseinrichtung 12 zum Empfangen von (z. B. analogen oder digitalen) Signalen von der Überwachungseinrichtung 12. Die Auswerteeinrichtung 14 ist in Kommunikationsverbindung mit der Signalisiereinrichtung 16 zum Ansteuern bzw. Anweisen der Signalisiereinrichtung 16.

Die Auswerteeinrichtung 14 kann beispielsweise dauerhaft, temporär oder ereignisgesteuert (z. B. fahrzeuggeschwindigkeitsabhängig, fahrzeugpositionsabhängig mittel Navigationssystem oder von einem anderen fahrzeuginternen oder externen System) aktiviert und deaktiviert werden. Die Auswerteeinrichtung 14 kann in eine bestehende Steuereinheit des Fahrzeugs 10 integriert werden oder als zusätzliche Steuereinheit zur Verbindung mit dem Fahrzeug 10 implementiert sein.

Die Auswerteeinrichtung 14 wertet die von der Überwachungseinrichtung 12 empfangenen Signale zum Erkennen einer gasförmigen, flüssigen und/oder festen Verunreinigung aus. Wenn eine Verunreinigung erkannt wird, kann zudem eine Lokalisierung der Verunreinigung im Personenaufenthaltsraum 18 erfolgen. Die Lokalisierung kann beispielsweise derart erfolgen, dass dem Sensor, der die Verunreinigung erfasst hat, einer der Abschnitte 18A-18D zugeordnet ist. Die Lokalisierung kann auch durch kombinierte Auswertung der Signale mehrerer Sensoren der Überwachungseinrichtung 12 erfolgen, indem die jeweilige Intensität der erfassten Verunreinigung verglichen wird. Beispielsweise kann bei mehreren elektrochemischen Sensoren eine Art Triangulation auf Basis der jeweiligen Intensität des gemessenen Geruchsstoffs durchgeführt werden. Beispielsweise kann erkannt werden, dass im Abschnitt 18D eine Verunreinigung besteht.

Wenn die Auswerteeinrichtung 14 eine Verunreinigung erkennt, kann sie bestimmen, dass der der Verunreinigung zugehörige Abschnitt 18A, 18B, 18C oder 18D zu sperren ist, zum Beispiel der Abschnitt 18D. Die Sperrung kann bevorzugt eine virtuelle Sperrung sein, bei der die Auswerteeinrichtung die Signalisiereinrichtung 16 anweist, ein Signal im Personenaufenthaltsraum 18 auszugeben, dass auf eine Sperrung bzw. Verunreinigung des verunreinigten Abschnitts hinweist. Es ist auch möglich, dass die Sperrung eine physische Sperrung ist, z. B. in Form einer automatischen Barriere, die z. B. Teil der Signalisiereinrichtung 16 ist. Eine automatische Barriere kann beispielsweise ein automatisch hochklappender Sitz des verunreinigten Abschnittes, eine automatisch verriegelnde Tür vor oder in dem verunreinigten Abschnitt, eine sich automatisch absenkende Schranke vor oder in dem verunreinigten Abschnitt oder ein automatisch betätigter Luftvorhang vor oder in dem verunreinigten Abschnitt sein.

Die Signalisiereinrichtung 16 ist dazu ausgebildet, Personen im Personenaufenthaltsraum 18 zu signalisieren, wenn ein Abschnitt 18A-18D aufgrund einer erkannten Verunreinigung gesperrt ist. Die Signalisiereinrichtung 16 wird entsprechend von der Auswerteeinrichtung 14 gesteuert.

Die Signalisiereinrichtung 16 kann die Sperrung bevorzugt visuell signalisieren. Beispielsweise kann die Signalisiereinrichtung 16 mindestens eine Anzeige aufweisen, die beispielsweise aktiviert oder deaktiviert wird, wenn eine Sperrung eines Bereichs zu signalisieren ist. Die Anzeige kann in oder zumindest in der Nähe des gesperrten Abschnitts angeordnet sein. Beispielsweise kann die Anzeige im Sitz, daneben oder darüber in der Verkleidung oder Fahrzeugeinbauten angeordnet sein. Die Anzeige kann beispielsweise eine farbiges (z. B. rotes) Lichtelement (z. B. Kreuzsymbol), eine Lampe oder einen Schriftzug aufweisen. Es ist auch möglich, dass die Signalisiereinrichtung 16 den gesperrten Abschnitt (z. B. den gesperrten Sitz) farbig (z. B. rot) und/oder mit einem Symbol anstrahlt, um die Sperrung visuell zu signalisieren.

Alternativ oder zusätzlich kann die Signalisiereinrichtung 16 die Sperrung akustisch signalisieren. Beispielsweise kann eine entsprechende automatische Durchsage mittels Lautsprecher des Fahrzeugs 10 durchgeführt werden, vorzugsweise wenn sich eine Person dem gesperrten Abschnitt nähert oder eine Person den Personenaufenthaltsraum 18 betritt.

Alternativ oder zusätzlich kann die Signalisiereinrichtung 16 die Sperrung durch automatische Aktivierung einer Zugangsbarriere zu dem gesperrten Abschnitt signalisieren, wie bereits beschrieben wurde. Es ist möglich, das die Zugangsbarriere nur noch von innerhalb des gesperrten Abschnitts öffenbar oder überwindbar ist, um einer Person, die sich noch im gesperrten Abschnitt befindet, ein Verlassen des gesperrten Abschnitts zu ermöglichen.

Das oben beschriebene System bestehend aus der Überwachungseinrichtung 12, der Auswerteeinrichtung 14 und der Signalisiereinrichtung 16 kann auf unterschiedliche Weise modifiziert oder ergänzt werden. Nachfolgend sind hierzu einige Beispiele unter Bezugnahme auf die Figur 1 beschrieben.

Die Auswerteeinrichtung 14 kann eine Sperrung des verunreinigten Abschnitts beispielsweise erst bestimmen, wenn die Verunreinigung auch noch nach einer vorbestimmten Zeitdauer (z. B. 30 s, 1 min, 5 min usw.) erkannt wird.

Die Auswerteeinrichtung 14 kann ferner in Kommunikationsverbindung mit einer Desodoriereinrichtung 20, einer Fahrzeuglüftungseinrichtung 22, einer Dachluke 24, einem Fensteröffner 26, einer Reinigungseinrichtung 28, einer Personenerkennungseinrichtung 30 und/oder einer Warneinrichtung 32 des Fahrzeugs 10 und/oder einer Zentrale bzw. Leitstelle 34 sein.

Die Desodoriereinrichtung 20 kann einen Geruchsstoff zum Desodorieren in den Personenaufenthaltsraum 18 einsprühen. Beispielsweise kann die Desodoriereinrichtung 20 direkt in den Personenaufenthaltsraum 18 oder in eine Lüftungseinrichtung des Fahrzeugs 10 einsprühen. Der Geruchsstoff dient zum Überdecken eines Störgeruchs der Verunreinigung. Die Desodoriereinrichtung 20 kann von der Auswerteeinrichtung 14 angewiesen werden, den Geruchsstoff einzusprühen, wenn die Auswerteeinrichtung die Sperrung eines Abschnitts des Personenaufenthaltsraums 18 bestimmt. Es ist möglich, dass die Desodoriereinrichtung 20 so von der Auswerteeinrichtung 14 gesteuert ist, dass der Geruchsstoff in einer Richtung oder direkt in den gesperrten Abschnitt eingesprüht wird.

Die Fahrzeuglüftungseinrichtung 22 kann zum Lüften des Fahrzeugs 10 ausgeführt sein. Beispielsweise kann die Fahrzeuglüftungseinrichtung 22 ein Teil einer Fahrzeugklimaanalage sein. Die Auswerteeinrichtung 14 kann die Fahrzeuglüftungseinrichtung 22 zum Lüften des gesperrten Abschnitts aktivieren oder die Fahrzeuglüftungseinrichtung 22 anweisen, eine durch die Fahrzeuglüftungseinrichtung 22 bewirkte Belüftung des Fahrzeugs 10 zu verstärken (z. B. mittels Erhöhung einer Lüfterdrehzahl). Sofern die Fahrzeuglüftungseinrichtung 22 mehrere Lüftungsauslässe im Personenaufenthaltsraum 18 aufweist, kann es möglich sein, dass nur diejenigen Lüftungsauslässe geöffnet oder weiter geöffnet werden, die im gesperrten Abschnitt oder in der Umgebung des gesperrten Abschnitts angeordnet sind.

Die Dachluke 24 kann eine automatisch, z. B. elektromotorisch, öffenbare Dachluke sein. Die Auswerteeinrichtung 14 kann die Dachluke 24 zum Öffnen ansteuern, um den gesperrten Abschnitt zu lüften. Sofern mehrere Dachluken 24 vorhanden sind, kann es möglich sein, dass nur diejenige Dachluke geöffnet oder weiter geöffnet wird, die oberhalb des gesperrten Abschnitts oder in der Umgebung des gesperrten Abschnitts angeordnet ist. Die Öffnung kann temporär sein. Wenn die Auswerteeinrichtung14 beispielsweise bestimmt, dass die Verunreinigung beseitigt ist, kann die Dachluke 24 wieder geschlossen werden.

Der Fensteröffner 26 kann ein automatischer, z. B. elektromotorischer, Fensterheber zum Öffnen mindestens eines Fensters sein, z. B. durch Verschieben oder Verschwenken. Die Auswerteeinrichtung 14 kann den Fensteröffner 26 zum Öffnen des jeweiligen Fensters ansteuern. Sofern mehrere Fensteröffner bzw. öffenbare Fenster vorhanden sind, kann es möglich sein, dass nur dasjenige Fenster oder diejenigen Fenster geöffnet oder weiter geöffnet werden, die in der Umgebung des gesperrten Abschnitts angeordnet sind. Die Öffnung kann temporär sein. Wenn die Auswerteeinrichtung 14 beispielsweise bestimmt, dass die Verunreinigung beseitigt ist, kann das Fenster mittels des Fensteröffners 26 wieder geschlossen werden.

Es ist auch möglich, dass ein gezielter Luftzug im Fahrzeug 10 erzeugt wird, der die gasförmige Verunreinigung nach außerhalb des Fahrzeugs 10 transportiert. Beispielsweise können zwei Fenster (oder z. B. ein Fenster und eine Dachluke) so geöffnet werden, dass ein Luftzug zwischen den beiden Fenster entsteht, der die gasförmige Verunreinigung kreuzt.

Die Reinigungseinrichtung 28 kann eine stationäre oder mobile Reinigungseinrichtung sein, die automatisch den gesperrten Abschnitt reinigen kann, wenn die Auswerteeinrichtung 14 die Reinigungseinrichtung 28 entsprechend anweist. Die Reinigungseinrichtung 28 kann beispielsweise einen mobilen Saug- und/oder Wischroboter aufweisen. Die Reinigungseinrichtung 28 kann mindestens einen fest installierten Reinigungsarm aufweisen. Die Reinigungseinrichtung 28 kann einen Sitzbezugswechsler zum Wechseln eines Sitzbezugs eines Sitzes aufweisen.

Die Personenerkennungseinrichtung 30 kann eine Person in dem Personenaufenthaltsraum 18 erkennen. Die Personenerkennungseinrichtung 30 kann über mechanische, optische und/oder thermische Sensoren eine Anwesenheit einer Person erkennen. Die Personenerkennungseinrichtung 30 kann ein entsprechendes Signal an die Auswerteeinrichtung 14 abgeben. Es ist möglich, dass die Personenerkennungseinrichtung 30 nicht nur ein Vorhandensein einer Person in dem Personenaufenthaltsraum 18 erkennen kann, sondern zudem noch eine Lokalisierung der Person im Personenaufenthaltsraum 18 vornehmen kann. Beispielsweise kann so erkannt werden, ob eine Person in dem gesperrten Abschnitt ist oder nicht. Es ist auch möglich, dass die Personenerkennungseinrichtung 30 die Auswerteeinrichtung 14 aktiviert, wenn die Anwesenheit einer Person im Personenaufenthaltsraum erkannt wird. Es ist möglich, dass die Personenerkennungseinrichtung 30 der Auswerteeinrichtung 14 einen Abschnitt 18A, 18B, 18C oder 18C zur Überprüfung auf eine Verunreinigung vorgibt, z. B. der Abschnitt, in dem sich die erkannte Person aufhält.

Die Warneinrichtung 32 kann Personen im Personenaufenthaltsraum beispielsweise visuell, akustisch oder haptisch warnen. Die Warneinrichtung 32 kann beispielsweise eine Sitzrüttelfunktion, eine Bandansage, einen Warnton, eine visuelle Warnung usw. ausgeben. Die Warneinrichtung 32 kann in die Sitzplätze, in Verkleidungsteile usw. des Fahrzeugs 10 integriert sein. Die Warneinrichtung 32 kann von der Auswerteeinrichtung 14 beispielsweise aktiviert werden, um eine Person im gesperrten Abschnitt oder im Personenaufenthaltsraum vor einer bevorstehenden automatischen Reinigung durch die Reinigungseinrichtung 28 zu warnen. Die Warneinrichtung kann auch dazu verwendet werden, Personen zu warnen, die sich dem gesperrten Abschnitt nähern. Die Warneinrichtung 32 kann separat zu der Signalisiereinrichtung 16 oder integriert mit der Signalisiereinrichtung 16 ausgeführt sein.

Die Leitstelle 34 kann von der Auswerteeinrichtung 14 über die Sperrung des Abschnitts informiert werden. Die Leitstelle 34 kann die Auswerteeinrichtung 14 anweisen, das Fahrzeug 10 autonom zu einer Reinigungsstation zu fahren, z. B. wenn die fahrzeugeigenen Mittel (Desodoriereinrichtung 20, Fahrzeuglüftungseinrichtung 22, Dachluke 24, Fensteröffner 26 und/oder Reinigungseinrichtung 28) zur Beseitigung der Verunreinigung nicht erfolgreich waren. Die Leitstelle 34 kann auch Servicepersonal zu dem Fahrzeug 10 schicken. Es ist möglich, dass die Leitstelle 34 die Auswerteeinrichtung 14 aktiviert und vorzugsweise einen Abschnitt 18A, 18B, 18C oder 18D zur Überprüfung auf eine Verunreinigung bestimmt.

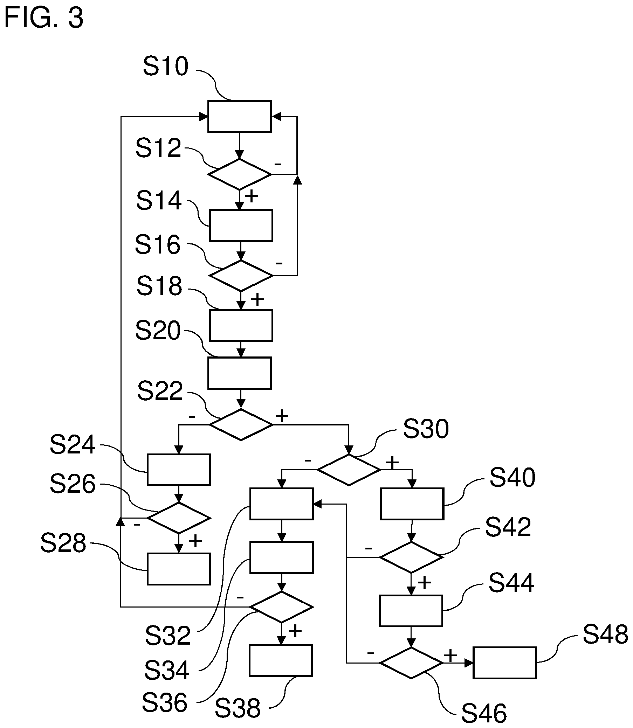

Unter Bezugnahme auf Figur 3 ist nachfolgend ein beispielhaftes Verfahren zum Betreiben des Kraftfahrzeugs 10 beschrieben, dass die Einrichtungen 12-32 sowie die Leitstelle 34 nutzt. Es versteht sich, dass das beschriebene Verfahren rein beispielhaft ist und modifiziert, ergänzt oder gekürzt werden könnte. Die einzelnen Schritte des Verfahrens können jeweils auch ohne Ausführung eines Teils oder aller vorheriger und/oder nachfolgender Schritte ausgeführt werden. Die Schritte können sequentiell oder zumindest teilweise parallel ausgeführt werden. Das nachfolgend beschriebene Verfahren ist insbesondere auf die Überwachung bezüglich störender Gerüche fokussiert. Es versteht sich, dass auch andere Fokussierungen bzgl. der Verunreinigung (gasförmig, flüssig oder fest) möglich sind.

In einem Schritt S10 wird der Personenaufenthaltsraum 18 überwacht, z. B. mittels der Überwachungseinrichtung 12.

In einem Schritt S12 wird bestimmt, ob eine Geruchsverunreinigung in dem Personenaufenthaltsraum 18 aus den Überwachungssignalen erkannt wird, und wenn ja, vorzugsweise in welchem Abschnitt 18A-18D des Personenaufenthaltsraums die Verunreinigung aufgetreten ist. Der Schritt S12 kann von der Auswerteeinrichtung 14 durchgeführt werden.

Wird keine Geruchsverunreinigung im Schritt S12 erkannt (-), kann mit dem Schritt S10 fortgefahren werden. Wird eine Geruchsverunreinigung im Schritt S12 erkannt (+), kann mit einem Schritt S14 fortgefahren werden.

In dem Schritt S14 läuft eine vorbestimmte Zeitdauer (z. B. 30 s, 1 min oder 5 min) ab. Der Schritt S14 kann beispielsweise durch einen in der Auswerteinrichtung 14 integrierten Timer ausgeführt werden.

In einem Schritt S16 wird bestimmt, ob die Geruchsverunreinigung in dem Personenaufenthaltsraum 18 basierend auf aktuellen Überwachungssignalen noch immer erkannt wird oder ob diese sich bereits verflüchtigt hat. Wird keine Geruchsverunreinigung im Schritt S16 erkannt (-), kann mit dem Schritt S10 fortgefahren werden. Wird die Geruchsverunreinigung im Schritt S16 wiedererkannt (+), kann mit einem Schritt S18 fortgefahren werden.

Im Schritt 18 wird eine (z. B. virtuelle und/oder physische) Sperrung des verunreinigten Abschnitts bestimmt, z. B. mittels des Auswerteeinrichtung 14.

Im Schritt 20 wird der gesperrte Abschnitt beispielsweise visuell signalisiert, z. B. mittels der Signalisiereinrichtung 16.

Im Schritt S22 wird bestimmt, ob aus den Überwachungssignalen eine Flüssigkeitsverunreinigung in dem Personenaufenthaltsraum 18 aus den Überwachungssignalen erkannt wird, vorzugsweise in demselben Abschnitt, in dem auch die Geruchsverunreinigung erkannt wurde. Wird keine Flüssigkeitsverunreinigung erkannt (-), kann mit einem Schritt S24 fortgefahren werden. Wird eine Flüssigkeitsverunreinigung erkannt (+), kann mit einem Schritt S30 fortgefahren werden. Der Schritt S22 kann von der Auswerteeinrichtung 14 ausgeführt werden.

Im Schritt S24 wird versucht, die Geruchsverunreinigung mittels mindestens einer fahrzeugeigenen Maßnahme zu beseitigen, z. B. mittels einer der Einrichtungen 20-26.

Im Schritt S26 wird bestimmt, ob aus aktuellen Überwachungssignalen noch immer eine Geruchsverunreinigung erkannt wird, z. B. mittels der Auswerteeinrichtung 14. Wird keine Geruchsverunreinigung mehr erkannt (-), kann die Sperrung des Abschnitts aufgehoben und dessen Signalisierung aufgehoben werden und das Verfahren mit dem Schritt S10 fortgesetzt werden. Wird weiterhin eine Geruchsverunreinigung erkannt (+), kann mit einem Schritt S28 fortgefahren werden.

Im Schritt S28 kann die Leitstelle 34 entsprechend informiert werden, z. B. mittels der Auswerteeinrichtung 14. In der Leitstelle 34 kann beispielsweise entschieden werden, dass das Fahrzeug 10 trotz Verunreinigung weiter betrieben wird oder aus dem Umlauf genommen und zu einer Reinigungsstation gefahren wird oder Servicepersonal zu dem Fahrzeug 10 entsandt wird.

Im Schritt S30 kann eine Personenerkennung in dem gesperrten Abschnitt vorgenommen werden, z. B. mittels der Personenerkennungseinrichtung 30. Wird keine Person erkannt (-), kann mit einem Schritt S32 fortgefahren werden. Wird mindestens eine Person in dem gesperrten Abschnitt erkannt (+), kann mit einem Schritt S40 fortgefahren werden.

Im Schritt S32 wird die Reinigungseinrichtung 28 zum Säubern der Flüssigkeitsverunreinigung des gesperrten Abschnitts, z. B. des Sitzes oder des Bodens, aktiviert.

Im Schritt S34 wird versucht, insbesondere die Geruchsverunreinigung mittels mindestens einer fahrzeugeigenen Maßnahme zu beseitigen, z. B. mittels einer der Einrichtungen 20-26. Im Schritt S36 wird bestimmt, ob aus aktuellen Überwachungssignalen noch immer eine Geruchs- und/oder Flüssigkeitsverunreinigung erkannt wird, z. B. mittels der Auswerteeinrichtung 14. Wird keine Verunreinigung mehr erkannt (-), kann die Sperrung des Abschnitts und dessen Signalisierung aufgehoben werden und das Verfahren mit dem Schritt S10 fortgesetzt werden. Wird weiterhin eine Geruchsverunreinigung erkannt (+), kann mit einem Schritt S38 fortgefahren werden.

Im Schritt S38 kann die Leitstelle 34 wie im Schritt S28 entsprechend informiert und in der Leitstelle 34 entsprechend reagiert werden.

Im Schritt S40 kann die mindestens eine Person im gesperrten Abschnitt vor einem Beginn einer automatischen Reinigung des gesperrten Bereichs gewarnt werden, z. B. mittels der Warneinrichtung 32.

Im Schritt S42 kann eine erneute Personenerkennung in dem gesperrten Abschnitt vorgenommen werden, z. B. mittels der Personenerkennungseinrichtung 30. Wird keine Person erkannt (-), kann mit dem Schritt S32 fortgefahren werden. Wird mindestens eine Person in dem gesperrten Abschnitt erkannt (+), kann mit einem Schritt S44 fortgefahren werden.

Im Schritt S44 kann die mindestens eine Person im gesperrten Abschnitt erneut vor einem Beginn einer automatischen Reinigung des gesperrten Bereichs gewarnt werden, z. B. mittels der Warneinrichtung 32.

Im Schritt S46 kann eine erneute Personenerkennung in dem gesperrten Abschnitt vorgenommen werden, z. B. mittels der Personenerkennungseinrichtung 30. Wird keine Person erkannt (-), kann mit dem Schritt S32 fortgefahren werden. Wird mindestens eine Person in dem gesperrten Abschnitt erkannt (+), kann mit einem Schritt S48 fortgefahren werden.

Im Schritt S48 kann die Leitstelle 34 wie im Schritt S28 entsprechend informiert und in der Leitstelle 34 entsprechend reagiert werden. Es ist auch möglich, dass eine Person während der Fahrt einschläft, die am Ende eines Betriebszeitraums oder Linienbetriebs (Betriebsende oder anstehende Wartungsfahrt für das Fahrzeug 10) im Fahrzeug 10 verweilt. Falls die Person auf sonstige Anweisungsmöglichkeiten über Funksignale (z. B. Weckton, Sprechansage, Rüttelfunktion im Sitz, etc.) nicht reagiert, kann die Überwachungseinrichtung 12 z. B. zur Geruchsüberwachung von der Leitstelle aktiviert werden, um zu überprüfen, ob diese Person beispielsweise unter Einfluss von Rauschmittel steht. Hierbei sondert die Person beispielsweise nur gasförmige Ausscheidungen aus, deren Messkonzentration geringer ist, als wenn Flüssigkeiten offen im Raum austreten. Das Messergebnis wird an die Leitstelle 34 übermittelt, die geeignete Maßnahmen einleiten kann. Dies können neben einer Entsendung eines Servicepersonals auch Rettungskräfte sein.

Die Erfindung ist nicht auf die vorstehend beschriebenen bevorzugten Ausführungsbeispiele beschränkt. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Fahrzeug
- 12: Überwachungseinrichtung
- 14: Auswerteeinrichtung
- 16: Signalisiereinrichtung
- 18: Personenaufenthaltsraum
- 18A-18D: Abschnitte
- 20: Desodoriereinrichtung
- 22: Fahrzeuglüftungseinrichtung
- 24: Dachluke
- 26: Fensteröffner
- 28: Reinigungseinrichtung
- 30: Personenerkennungseinrichtung
- 32: Warneinrichtung
- 34: Leitstelle
- S10-S48: Verfahrensschritte

## Patentansprüche

1. Fahrzeug (10), vorzugsweise autonomes Fahrzeug (10), zur Personenbeförderung, vorzugsweise Omnibus, aufweisend:
eine Signalisiereinrichtung (16), die dazu ausgebildet ist, eine Information an mindestens eine Person im Fahrzeug (10) zu signalisieren;
eine Überwachungseinrichtung (12), die dazu ausgebildet ist, einen Personenaufenthaltsraum (18) des Fahrzeugs (10) zu überwachen; und
eine Auswerteeinrichtung (14), die dazu ausgebildet ist:
- Signale von der Überwachungseinrichtung (12) zu empfangen,
- basierend auf den empfangenen Signalen von der Überwachungseinrichtung (12) einen Abschnitt (18D) des Personenaufenthaltsraums (18) mit einer, vorzugsweise gasförmigen, flüssigen und/oder festen, Verunreinigung zu erkennen,
- eine Sperrung des erkannten Abschnitts (18D) zu bestimmen, und
- die Signalisiereinrichtung (16) anzuweisen, den gesperrten Abschnitt (18D) zu signalisieren;
wobei:
die Überwachungseinrichtung (12) dazu ausgebildet ist, mehrere Abschnitte (18A-18D) des Personenaufenthaltsraums (18) des Fahrzeugs (10) zu überwachen;
**dadurch gekennzeichnet, dass**
die Auswerteeinrichtung (14) dazu ausgebildet ist, denjenigen Abschnitt (18D) aus den mehreren Abschnitten (18A-18D) zu erkennen, der die Verunreinigung aufweist, basierend auf einer unterschiedlichen Intensität einer Geruchsmessung an unterschiedlichen Positionen im Personenaufenthaltsraum (18).

2. Fahrzeug (10) nach Anspruch 1, wobei:
der gesperrte Abschnitt (18D) ein Sitz, eine Sitzgruppe oder ein Stehbereich des Personenaufenthaltsraums (18) ist.

3. Fahrzeug (10) nach Anspruch 1 oder Anspruch 2, wobei:
die Signalisiereinrichtung (16) dazu ausgebildet ist, den gesperrten Abschnitt (18D) visuell zu signalisieren, vorzugsweise mittels einer Anzeige der Signalisiereinrichtung (16) und/oder mittels Anstrahlung des gesperrten Abschnitts (18D); und/oder
die Signalisiereinrichtung (16) dazu ausgebildet ist, den gesperrten Abschnitt (18D) akustisch zu signalisieren; und/oder
die Signalisiereinrichtung (16) dazu ausgebildet ist, den gesperrten Abschnitt (18D) durch eine physische Sperrung zu signalisieren.

4. Fahrzeug (10) nach einem der vorherigen Ansprüche, wobei:
die Überwachungseinrichtung (12) mehrere elektrochemische Sensoren aufweist, die zur olfaktorischen Überwachung der mehreren Abschnitte (18A-18D) des Personenaufenthaltsraums (18) angeordnet sind, vorzugsweise am Dachhimmel, an Dachvouten, an mindestens einer Haltestange, an einer Innenverkleidung und/oder an mindestens einem Fensterrahmen des Fahrzeugs (10).

5. Fahrzeug (10) nach einem der vorherigen Ansprüche, wobei:
die Überwachungseinrichtung (12) mehrere Flüssigkeitserfassungssensoren aufweist, die zur Überwachung auf ein Vorhandensein einer Flüssigkeit in den mehreren Abschnitten (18A-18D) des Personenaufenthaltsraums (18) angeordnet sind, vorzugsweise in Sitzen und/oder im Boden des Fahrzeugs (10); und/oder
die Überwachungseinrichtung (12) mindestens eine Kameravorrichtung aufweist, die zur visuellen Überwachung der mehreren Abschnitte (18A-18D) des Personenaufenthaltsraums (18) angeordnet ist.

6. Fahrzeug (10) nach einem der vorherigen Ansprüche, wobei:
die Auswerteeinrichtung (14) ferner dazu ausgebildet ist, die Sperrung des erkannten Abschnitts (18D) erst dann zu bestimmen, wenn die Verunreinigung in dem erkannten Abschnitt (18D) nach einer vorbestimmten Zeitdauer noch immer besteht.

7. Fahrzeug (10) nach einem der vorherigen Ansprüche, wobei:
das Fahrzeug (10) ferner eine Desodoriereinrichtung (20) aufweist, die dazu ausgebildet ist, einen Geruchsstoff zum Desodorieren einzusprühen, und die Auswerteeinrichtung (14) ferner dazu ausgebildet ist, die Desodoriereinrichtung (20) zum Einsprühen des Geruchsstoffs anzuweisen, vorzugsweise in den gesperrten Abschnitt (18D) hinein oder in einer Richtung zu dem gesperrten Abschnitt (18D); und/oder
das Fahrzeug (10) ferner eine Fahrzeuglüftungseinrichtung (22) aufweist, die dazu ausgebildet ist, das Fahrzeug (10) zu lüften, und die Auswerteeinrichtung (14) ferner dazu ausgebildet ist, die Fahrzeuglüftungseinrichtung (22) zum Lüften des gesperrten Abschnitts (18D) anzuweisen; und/oder
das Fahrzeug (10) ferner eine Dachluke (24) und/oder einen Fensteröffner (26) aufweist, und die Auswerteeinrichtung (14) ferner dazu ausgebildet ist, die Dachluke (24) und/oder den Fensteröffner (26) zum Öffnen anzuweisen, um den gesperrten Abschnitt (18D) zu lüften.

8. Fahrzeug (10) nach einem der vorherigen Ansprüche, wobei:
das Fahrzeug (10) ferner eine Reinigungseinrichtung (28) aufweist, und
die Auswerteeinrichtung (14) ferner dazu ausgebildet ist, die Reinigungseinrichtung (28) zum Reinigen des gesperrten Abschnitts (18D) anzuweisen.

9. Fahrzeug (10) nach einem der vorherigen Ansprüche, wobei:
die Auswerteeinrichtung (14) ferner dazu ausgebildet ist, die Sperrung des Abschnitts (18D) an eine Leitstelle (34) zu kommunizieren, vorzugsweise wenn:
- die Verunreinigung auch nach einer Reinigung durch eine Reinigungseinrichtung (28) des Fahrzeugs (10) weiter besteht; und/oder
- die Verunreinigung auch nach einer Lüftung und/oder Desodorierung des Fahrzeugs (10) weiter besteht; und/oder
- die Verunreinigung auch nach Ablauf einer vorbestimmten Zeitdauer weiter besteht; und/oder
- eine Person in dem gesperrten Abschnitt (18D) erkannt wird, die trotz Warnung mittels einer Warneinrichtung (32) den gesperrten Abschnitt (18D) nicht verlässt.

10. Fahrzeug (10) nach einem der vorherigen Ansprüche, wobei:
das Fahrzeug (10) ferner eine Personenerkennungseinrichtung (30) aufweist, die dazu ausgebildet ist, eine Anwesenheit einer Person im gesperrten Abschnitt (18D) zu erkennen;
das Fahrzeug (10) ferner eine Warneinrichtung (32) aufweist, die dazu ausgebildet ist, eine Warnung auszugeben; und
die Auswerteeinrichtung (14) ferner dazu ausgebildet ist:
- Signale von der Personenerkennungseinrichtung (30) zu empfangen, und
- basierend auf den empfangenen Signalen von der Personenerkennungseinrichtung (30) die Warneinrichtung (32) anzuweisen, die Person im gesperrten Abschnitt (18D) des Personenaufenthaltsraums (18) zu warnen, vorzugsweise vor einer bevorstehenden automatischen Reinigung des gesperrten Abschnitts (18D).

11. Fahrzeug (10) nach einem der vorherigen Ansprüche, wobei:
die Auswerteeinrichtung (14) von einer Leitstelle (34) und/oder einer Personenerkennungseinrichtung (30) zur Erkennung einer Person im Personenaufenthaltsraum (18) aus aktivierbar und/oder steuerbar ist.

12. Fahrzeug (10) nach Anspruch 11, wobei:
die Auswerteeinrichtung (14) ferner dazu ausgebildet ist, die Verunreinigung in einem von der Leitstelle (34) und/oder der Personenerkennungseinrichtung (30) bestimmten Abschnitt (18A-18D) des Personenaufenthaltsraums (18) zu erkennen; und/oder
die Auswerteeinrichtung (14) ferner dazu ausgebildet ist, das Fahrzeug (10) autonom zu einer von der Leitstelle (34) bestimmten Reinigungsstation zu fahren.

13. Verfahren zum Betreiben eines, vorzugsweise autonomen, Fahrzeugs (10) nach einem der vorherigen Ansprüche, aufweisend:
Überwachen eines oder mehrerer Abschnitte (18A-18D) eines Personenaufenthaltsraums (18) des Fahrzeugs (10);
Erkennen eines Abschnitts (18A) des Personenaufenthaltsraums (18) mit einer, vorzugsweise gasförmigen, flüssigen und/oder festen, Verunreinigung basierend auf dem Überwachen;
Sperren des erkannten Abschnitts (18D); und
Signalisieren des gesperrten Abschnitts (18D) an mindestens eine Person im Fahrzeug (10).

14. Verfahren nach Anspruch 13, ferner aufweisend:
Desodorieren oder Lüften des gesperrten Abschnitts (18D); und/oder Kommunizieren des gesperrten Abschnitts (18D) an eine Leitstelle (34); und/oder Reinigen des gesperrten Abschnitts (18D); und/oder
Warnen einer in dem gesperrten Abschnitt (18D) erkannten Person.

## Claims

1. A vehicle (10), preferably autonomous vehicle (10), for passenger transport, preferably a bus, comprising:
a signalling device (16) which is configured to signal information to at least one person in the vehicle (10);
a monitoring device (12) which is configured to monitor a passenger compartment (18) of the vehicle (10); and
an evaluation device (14) which is configured to:
- receive signals from the monitoring device (12),
- detect a section (18D) of the passenger compartment (18) with a, preferably gaseous, liquid and/or solid, contamination based on the received signals from the monitoring device (12); and
- determine a blockage of the detected section (18D), and
- instructing the signalling device (16) to signal the blocked section (18D);
wherein:
the monitoring device (12) is configured to monitor a plurality of sections (18A-18D) of the passenger compartment (18) of the vehicle (10);
**characterised in that**
the evaluation device (14) is configured to detect that portion (18D) of the plurality of portions (18A-18D) comprising the contamination based on a different intensity of an odour measurement at different positions in the passenger compartment (18).

2. The vehicle (10) according to claim 1, wherein:
the blocked section (18D) is a seat, a seating group or a standing area of the passenger compartment (18).

3. The vehicle (10) according to claim 1 or claim 2, wherein:
the signalling device (16) is configured to visually signal the blocked section (18D), preferably by means of a display of the signalling device (16) and/or by means of illumination of the blocked section (18D); and/or
the signalling device (16) is configured to signal the blocked section (18D) acoustically; and/or
the signalling device (16) is configured to signal the blocked section (18D) by a physical blockage.

4. The vehicle (10) according to any one of the preceding claims, wherein:
the monitoring device (12) comprises a plurality of electrochemical sensors arranged for olfactory monitoring of the plurality of sections (18A-18D) of the passenger compartment (18), preferably on the headliner, on roof coves, on at least one grab rail, on an interior trim and/or on at least one window frame of the vehicle (10).

5. The vehicle (10) according to any of the previous claims, wherein:
the monitoring device (12) comprises a plurality of liquid detection sensors arranged for monitoring for the presence of a liquid in the plurality of sections (18A-18D) of the passenger compartment (18), preferably in seats and/or in the floor of the vehicle (10); and/or
the monitoring device (12) comprises at least one camera device arranged for visual monitoring of the plurality of sections (18A-18D) of the passenger compartment (18).

6. The vehicle (10) according to any one of the preceding claims, wherein:
the evaluation device (14) is further configured to determine the blockage of the detected section (18D) only when the contamination still exists in the detected section (18D) after a predetermined period of time.

7. The vehicle (10) according to any one of the preceding claims, wherein:
the vehicle (10) further comprises a deodorizing device (20) configured to spray an odorant for deodorizing, and the evaluation device (14) is further configured to instruct the deodorizing device (20) to spray the odorant, preferably into the blocked section (18D) or in a direction towards the blocked section (18D); and/or
the vehicle (10) further comprises a vehicle ventilation device (22) configured to ventilate the vehicle (10), and the evaluation device (14) is further configured to instruct the vehicle ventilation device (22) to ventilate the blocked section (18D); and/or
the vehicle (10) further comprises a roof hatch (24) and/or a window opener (26), and the evaluation device (14) is further configured to instruct the roof hatch (24) and/or the window opener (26) to open in order to ventilate the blocked section (18D).

8. The vehicle (10) according to any one of the preceding claims, wherein:
the vehicle (10) further comprises a cleaning device (28); and
the evaluation device (14) is further configured to instruct the cleaning device (28) to clean the blocked section (18D).

9. The vehicle (10) according to any one of the preceding claims, wherein:
the evaluation device (14) is further configured to communicate the blockage of the section (18D) to a control centre (34), preferably when:
- the contamination persists even after cleaning by a cleaning device (28) of the vehicle (10); and/or
- the contamination persists even after ventilation and/or deodorisation of the vehicle (10); and/or
- the contamination persists even after a predetermined period of time has elapsed; and/or
- a person is detected in the blocked section (18D) who does not leave the blocked section (18D) despite being warned by a warning device (32).

10. The vehicle (10) according to any one of the preceding claims, wherein:
the vehicle (10) further comprises a person detection device (30) configured to detect a presence of a person in the blocked section (18D);
the vehicle (10) further comprises a warning device (32) configured to output a warning; and
the evaluation device (14) is further configured to:
- receive signals from the person detection device (30), and
- based on the received signals from the person detection device (30), instruct the warning device (32) to warn the person in the blocked section (18D) of the passenger compartment (18), preferably of an upcoming automatic cleaning of the blocked section (18D).

11. The vehicle (10) according to any of the previous claims, wherein:
the evaluation device (14) is activatable and/or controllable from a control centre (34) and/or a person detection device (30) for detecting a person in the passenger compartment (18).

12. The vehicle (10) according to claim 11, wherein:
the evaluation device (14) is further configured to detect the contamination in a section (18A-18D) of the passenger compartment (18) determined by the control centre (34) and/or the person detection device (30); and/or
the evaluation device (14) is further configured to autonomously drive the vehicle (10) to a cleaning station determined by the control centre (34).

13. A method for operating a, preferably autonomous, vehicle (10) according to one of the previous claims, comprising:
monitoring one or more sections (18A-18D) of a passenger compartment (18) of the vehicle (10);
detecting a section (18A) of the passenger compartment (18) with a, preferably gaseous, liquid and/or solid, contamination based on the monitoring;
blocking the detected section (18D); and
signalling the blocked section (18D) to at least one person in the vehicle (10).

14. The method of claim 13, further comprising:
deodorising or ventilating the blocked section (18D); and/or
communicating the blocked section (18D) to a control centre (34); and/or
cleaning the blocked section (18D); and/or
warning a person detected in the blocked section (18D).

## Revendications

1. Véhicule (10), de préférence véhicule autonome (10), destiné au transport de personnes, de préférence omnibus, comportant :
un module de signalisation (16) qui est conçu pour signaler une information à au moins une personne dans le véhicule (10) ;
un module de surveillance (12) qui est conçu pour surveiller un habitacle (18) du véhicule (10) ; et
un module d'évaluation (14) qui est conçu pour :
- recevoir des signaux du module de surveillance (12),
- détecter, sur la base des signaux reçus du module de surveillance (12), une contamination de préférence gazeuse, liquide et/ou solide, dans une portion (18D) de l'habitacle (18),
- déterminer que la portion détectée (18D) est consignée, et
- ordonner au module de signalisation (16) de signaler que la portion (18D) est consignée ;
le module de surveillance (12) étant adapté pour surveiller plusieurs portions (18A-18D) de l'habitacle (18) du véhicule (10) ;
**caractérisé en ce que**
le module d'évaluation (14) est conçu pour identifier parmi la pluralité de portions (18A-18D) la portion (18D) qui présente la contamination, sur la base d'une intensité différente d'une mesure d'odeur à différentes positions dans l'habitacle (18).

2. Véhicule (10) selon la revendication 1 :
la portion consignée (18D) est un siège, un groupe de sièges ou une zone debout de l'habitacle (18).

3. Véhicule (10) selon la revendication 1 ou la revendication 2 :
le module de signalisation (16) est conçu pour signaler par des moyens visuels la portion consignée (18D), de préférence au moyen d'un affichage du module de signalisation (16) et/ou d'un éclairage de la portion consignée (18D) ; et/ou
le module de signalisation (16) étant conçu pour signaler par des moyens acoustiques la portion consignée (18D) ; et/ou
le module de signalisation (16) étant conçu pour signaler la portion consignée (18D) par un blocage physique.

4. Véhicule (10) selon l'une des revendications précédentes :
le module de surveillance (12) comportant plusieurs capteurs électrochimiques qui sont disposés de manière à effectuer la surveillance olfactive des plusieurs portions (18A-18D) de l'habitacle (18), de préférence au niveau du plafond, des corniches de toit, d'au moins une barre de retenue, d'un habillage intérieur et/ou d'au moins un cadre de vitre du véhicule (10).

5. Véhicule (10) selon l'une des revendications précédentes :
le module de surveillance (12) comportant plusieurs capteurs de détection de liquide qui sont disposés dans les plusieurs portions (18A-18D) de l'habitacle (18), de préférence dans des sièges et/ou dans le plancher du véhicule (10), de manière à surveiller la présence d'un liquide ; et/ou
le module de surveillance (12) comportant au moins un dispositif à caméra qui est disposé de manière à surveiller visuellement les plusieurs portions (18A-18D) de l'habitacle (18).

6. Véhicule (10) selon l'une des revendications précédentes :
le module d'évaluation (14) étant en outre conçu pour déterminer que la portion détectée (18D) est consignée uniquement si la contamination est toujours présente dans la portion détectée (18D) après une intervalle de temps prédéterminé.

7. Véhicule (10) selon l'une des revendications précédentes :
le véhicule (10) comportant en outre un module de désodorisation (20) qui est conçu pour pulvériser une substance odorante de désodorisation, et le module d'évaluation (14) étant en outre conçu pour ordonner au module de désodorisation (20) de pulvériser la substance odorante, de préférence dans la portion consignée (18D) ou en direction de la portion consignée (18D) ; et/ou
le véhicule (10) comportant en outre un module d'aération de véhicule (22) qui est conçu pour aérer le véhicule (10), et le module d'évaluation (14) étant également conçu pour ordonner au module d'aération de véhicule (22) d'aérer la portion consignée (18D) ; et/ou
le véhicule (10) comporte en outre une trappe de toit (24) et/ou un remonte-vitre (26), et le module d'évaluation (14) étant en outre conçu pour ordonner l'ouverture de la trappe de toit (24) et/ou du remonte-vitre (26) afin d'aérer la portion consignée (18D).

8. Véhicule (10) selon l'une des revendications précédentes :
le véhicule (10) comportant en outre un module de nettoyage (28) et
le module d'évaluation (14) étant en outre conçu pour ordonner au module de nettoyage (28) de nettoyer la portion consignée (18D).

9. Véhicule (10) selon l'une des revendications précédentes :
le module d'évaluation (14) étant en outre conçu pour communiquer à un poste de commande (34) que la portion (18D) est consignée, de préférence si :
- la contamination persiste également après nettoyage par un module de nettoyage (28) du véhicule (10) ; et/ou
- la contamination persiste même après que le véhicule (10) a été aéré et/ou désodorisé ; et/ou
- la contamination persiste même après un intervalle de temps prédéterminé ; et/ou
- une personne est détectée dans la portion consignée (18D) et ne quitte pas la portion consignée (18D) bien qu'elle ait été avertie par un module d'avertissement (32).

10. Véhicule (10) selon l'une des revendications précédentes :
le véhicule (10) comportant en outre un module de détection de personne (30) qui est adapté pour détecter la présence d'une personne dans la portion consignée (18D) ;
le véhicule (10) comportant en outre un module d'avertissement (32) qui est conçu pour émettre un avertissement ; et
le module d'évaluation (14) étant en outre conçu pour :
- recevoir des signaux du module de détection de personne (30) et
- ordonner, sur la base des signaux reçus du module de détection de personne (30), au module d'avertissement (32) d'avertir la personne se trouvant dans la portion consignée (18D) de l'habitacle (18), de préférence d'un nettoyage automatique imminent de la portion consignée (18D) .

11. Véhicule (10) selon l'une des revendications précédentes :
le module d'évaluation (14) pouvant être activé et/ou commandé à partir d'un poste de commande (34) et/ou d'un module de détection de personne (30) pour détecter une personne dans l'habitacle (18).

12. Véhicule (10) selon la revendication 11 :
le module d'évaluation (14) étant en outre conçu pour détecter la contamination dans une portion (18A-18D) de l'habitacle (18) qui a été déterminée par le poste de commande (34) et/ou le module de détection de personne (30) ; et/ou
le module d'évaluation (14) étant en outre conçu pour conduire le véhicule (10) de manière autonome vers une station de nettoyage déterminée par le poste de commande (34).

13. Procédé de fonctionnement d'un véhicule (10) de préférence autonome selon l'une des revendications précédentes, ledit procédé comprenant les étapes suivantes :
surveiller une ou plusieurs portions (18A-18D) d'un habitacle (18) du véhicule (10) ;
détecter une contamination, de préférence gazeuse, liquide et/ou solide, dans une portion (18A) de l'habitacle (18) sur la base de la surveillance ;
consigner la portion détectée (18D) ; et
signaler la portion consignée (18D) à au moins une personne dans le véhicule (10).

14. Procédé selon la revendication 13, comportant en outre les étapes suivantes :
désodoriser ou aérer la portion consignée (18D) ;
et/ou
communiquer à un poste de commande (34) que la portion (18D) est consignée ; et/ou
nettoyer la portion consignée (18D) ; et/ou
avertir une personne détectée dans la portion consignée (18D).
